# EUROPÄISCHE PATENTSCHRIFT

(11) **EP 0 704 451 B1**
(45) Veröffentlichungstag und Bekanntmachung des Hinweises auf die Patenterteilung: **29.12.1999**
(21) Anmeldenummer: 95114936.8
(22) Anmeldetag: 22.09.1995
(51) Int. Cl.: C07F 9/50

(54) **Verfahren zur Herstellung von sulfonierten Arylphosphinen**
Process for the preparation of sulfonated aryl phosphines
Procédé de préparation d'aryl phosphines sulfonées

(30) Priorität: 30.09.1994 DE 4435190
(43) Veröffentlichungstag der Anmeldung: 03.04.1996
(73) Patentinhaber: Celanese GmbH, 60439 Frankfurt (DE)
(72) Erfinder: Albanese, Guido, D-80993 München (DE); Manetsberger, Rainer, Dr., D-82407 Wielenbach (DE); Herrmann, Wolfgang, A. Prof. Dr., D-85354 Freising (DE); Schwer, Christine, Dr., D-80337 München (DE)

(56) Entgegenhaltungen:
- EP-A- 0 107 006
- EP-A- 0 175 919
- EP-A- 0 632 047
- ANGEW. CHEM., INT. ED. ENGL. (ACIEAY,05700833);95; VOL.34 (7); PP.811-13, UNIV. MUENCHEN;ANORGANISH-CHEMISCHES INST. TECHNISCHEN; GARCHING; D-85747; GERMANY (DE), HERRMANN W A ET AL 'Water-soluble metal complexes and catalysts. 8. New process for the sulfonation of phosphine ligands for catalysts'

## Beschreibung

Die Erfindung betrifft ein Verfahren zur Herstellung sulfonierter Arylphosphine durch Umsetzung von Arylphosphinen mit einem wasserfreien Gemisch aus Schwefelsäure und Orthoborsäure. Der neue Prozeß zeichnet sich durch Vermeidung von Nebenreaktionen, insbesondere die Bildung von Phosphinoxiden aus.

Komplexverbindungen, die als Zentralatom ein Metall der Gruppe VIII A des Periodensystems (IUPAC-Version) und als Liganden P(III)-Verbindungen wie Phosphine und daneben gegebenenfalls noch weitere zur Komplexbildung befähigte Gruppen enthalten, haben in den letzten Jahren zunehmend als Katalysatoren Bedeutung gewonnen. So erfolgt die technisch in großem Umfang ausgeübte Reaktion von Olefinen mit Synthesegas zu Aldehyden (Hydroformylierung) in Gegenwart von Katalysatoren, die aus Kobalt und insbesondere Rhodium und Triphenylphosphin bestehen. Entsprechend der Löslichkeit dieser Katalysatoren in organischen Medien verläuft die Reaktion in homogener Phase.

Statt in homogener Phase, kann man diese Umsetzung, wie auch andere katalytische Reaktionen, in heterogenen Reaktionssystemen durchführen. Diese eigenständige Entwicklung beschränkt sich nicht auf Komplexverbindungen von Metallen der Gruppe VIII A, sondern schließt auch Komplexverbindungen der Gruppen VII A und I B des Periodensystems (IUPAC-Version) als Katalysatoren ein. Der Einsatz in Wasser gelöster Katalysatoren hat den Vorteil, sie einfach und schonend von dem in Wasser nicht löslichen Reaktionsprodukt abtrennen zu können. Nach diesem Prinzip arbeitet z.B. das in der DE-C-27 00 904 beschriebene Verfahren zur Anlagerung von Cyanwasserstoff an eine ungesättigte organische Verbindung mit mindestens einer ethylenischen Doppelbindung. Als Katalysatoren sind für diese Reaktion Nickel/TPPTS [TPPTS steht für Tris(m-sulfonatophenyl)phosphin], Palladium/TPPTS oder Eisen/TPPTS geeignet. Für die Herstellung von Aldehyden durch Reaktion von Olefinen mit Kohlenmonoxid und Wasserstoff setzt man nach dem Prozeß der DE-C-26 27 354 Rhodium in metallischer Form oder in Form einer seiner Verbindungen zusammen mit einem wasserlöslichen Phosphin, z.B. TPPTS, als Katalysator ein. Weitere Katalysatoren der genannten Art und ihre Anwendung bei verschiedenen Reaktionen wie Hydrierungen, der Allen-Alkin-Kupplung und der Amin-Addition an Doppelbindungen sind z.B. Gegenstand der EP-A-372 313.

Sulfonierte Phenylphosphine erhält man nach einem in J.Chem.Soc., Jg. 1958, Seiten 281, 282 beschriebenen Verfahren durch Umsetzung von Triphenylphosphin mit Oleum, Erwärmen des Reaktionsgemisches auf einem Wasserbad, Verdünnen des Umsetzungsproduktes mit Wasser und Neutralisieren mit Natriumhydroxid. Aus dem Sulfonierungsgemisch kristallisiert das Natriumsalz des Diphenyl-(m-sulfonatophenyl)phosphins aus.

Nach ähnlichen Verfahren gewinnt man auch Dinatriumsalze des Di(m-sulfonatophenyl)phenylphosphins und des Tri(m-sulfonatophenyl)phosphins. Einsatzstoff ist in beiden Fällen wiederum Triphenylphosphin, das mit Oleum bei Temperaturen zwischen 18 und 40°C in einem Zeitraum von 15 bis 63 Stunden umgesetzt wird. Das Reaktionsprodukt wird wiederum mit Wasser verdünnt und mit Natriumhydroxid neutralisiert, wobei darauf zu achten ist, daß während der Zugabe des Natriumhydroxids im Gemisch Temperaturen unterhalb 20°C eingehalten werden (DE-C-26 27 354).

Außer Monophosphinen werden auch sulfonierte Di- und Polyphosphine als Bestandteile von Katalysatoren verwendet. Beispiele für ihre Herstellung finden sich in der DE-A-40 40 314.

Ein Nachteil aller bekannten Verfahren zur Gewinnung sulfonierter Arylphosphine ist die unerwünschte Bildung von Phosphor-Sauerstoff-Verbindungen, d.h. die Oxidation des dreibindigen Phosphors zu fünfbindigem durch Schwefeltrioxid oder molekularen Sauerstoff. Die resultierenden Phosphinoxide vermögen mit Metall-Ionen keine katalytisch aktiven Komplexbindungen einzugehen, sind also als Katalysatorkomponente wertlos. Sie werden daher üblicherweise aus dem Gemisch der Sulfonierungsprodukte selektiv abgetrennt, um die Katalysatorlösung nicht übermäßig durch inerte Stoffe zu belasten. Zur Begrenzung der Oxidation arbeitet man bei möglichst niedrigen Sulfonierungstemperaturen. Diese Maßnahme führt zur Bildung wasserlöslicher Phosphine, bei denen der maximal mögliche Sulfonierungsgrad und damit die höchste erzielbare Löslichkeit in Wasser, sie ist wichtig für den Rückhalt der Metallkomponente des Katalysatorsystems im Wasser, nicht erreicht wird. Einer weitergehenden Sulfonierung durch Verlängerung der Reaktionszeit steht die gleichzeitig zunehmende Oxidation entgegen.

Es bestand daher die Aufgabe ein Verfahren zu entwickeln, das die mit der Sulfonierung einhergehende Oxidation der eingesetzten Phosphine vermeidet, dadurch höhere Reaktionstemperaturen und längere Reaktionszeiten erlaubt und überdies in weiten Grenzen die Einstellung eines definierten Sulfonierungsgrades ermöglicht.

Die Erfindung besteht in einem Verfahren zur Herstellung sulfonierter Arylphosphine durch Sulfonierung Arylgruppen enthaltender Mono-, Di-, Oligo- oder Polyphosphine. Es ist dadurch gekennzeichnet, daß man die Sulfonierung bei Temperaturen zwischen 20 und 350°C mit einem wasserfreien Gemisch aus Schwefelsäure und Orthoborsäure durchführt.

Überraschenderweise hat sich gezeigt, daß die Verwendung eines wasserfreien Gemisches aus Schwefelsäure und Orthoborsäure als Sulfonierungsmittel die Bildung von phinoxiden, selbst bei oxidationsempfindlichen Phosphinen, erheblich mindert oder gänzlich unterdrückt. Die Umsetzung kann daher bei höherer Temperatur und/oder über einen längeren Zeitraum erfolgen als mit dem bisher verwendeten Sulfonierungsmittel Oleum. Überdies ist es möglich, durch Auswahl der Reaktionstemperatur selektiv zu sulfonieren, d.h. den Sulfonierungsgrad zu beeinflussen. Auch die Aufarbeitung des Sulfonierungsgemisches wird u.a. wegen der geringeren Wärmeentwicklung bei der Hydrolyse vereinfacht.

Ein wesentliches Merkmal der erfindungsgemäßen Arbeitsweise ist die Verwendung einer wasserfreien Mischung der beiden Komponenten als Sulfonierungsmittel. Daher setzt man die Schwefelsäure zweckmäßig in wasserfreier Form ein. Überdies ist es erforderlich, Reaktionswasser, das im Sulfonierungsreagenz H₂SO₄/H₃BO₃ nach der Gleichung 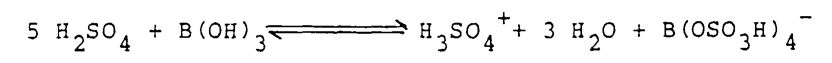 gebildet wird, durch wasserbindende Substanzen aus dem Reaktionsgemisch zu entfernen. Besonders bewährt hat sich für diesen Zweck Schwefeltrioxid, das mit Wasser Schwefelsäure, also eine reaktionseigene Verbindung, bildet. Zweckmäßig setzt man es in Form von Oleum ein.

Das wasserbindende Reagenz wird dem Reaktionsgemisch in dem Maße zudosiert, wie Wasser entsteht.

Weiterer Bestandteil des Sulfonierungsgemisches ist Orthoborsäure. Sie wird in handelsüblicher Form verwendet. Eine besondere Reinigung ist nicht erforderlich. Man setzt die Säure, bezogen auf die im zu sulfonierenden Phosphin enthaltenen P(III)-Atome, etwa in äquimolaren Mengen ein, so daß je mol Phosphoratom ein mol Borsäure vorliegt. Ein geringer Unterschuß schadet nicht, ein Überschuß wird jedoch bevorzugt. Besonders vorteilhaft ist es, Orthoborsäure bis zur Sättigung in der Schwefelsäure zu lösen.

Ausgangsverbindungen für die Sulfonierung sind Arylphosphine. Unter dieser allgemeinen Bezeichnung werden Mono-, Di-, Oligo- und Polyphosphine verstanden, die mindestens einen aromatischen Rest enthalten, der sulfoniert werden kann. Der aromatische Rest kann aus einem oder mehreren Benzolringen bestehen, die, wie Biphenyl, durch eine einfache C-C-Bindung verbunden sind oder deren Kohlenstoffringe mehrere gemeinsame Kohlenstoffatome aufweisen (kondensierte Ringsysteme), wie die Naphthylgruppe. Die aromatischen Reste können weiterhin ein- oder mehrfach substituiert sein, z.B. durch Fluor, Chlor oder durch Alkyl-, Alkoxy- und Nitrogruppen. Beispiele für Monophosphine, die nach dem neuen Prozeß sulfoniert werden können, sind Dimethylphenyl-, Methyldiphenyl- und Triphenylphosphin. Die Gruppe der Diphosphine wird beispielhaft durch das 2,2'-Bis(diphenylphosphinomethyl)-biphenyl und das 2,2'-Bis(diphenylphosphinomethyl)-1,1'-binaphthyl beschrieben. Unter Phosphinen werden auch Verbindungen des dreibindigen Phosphors verstanden, in denen das Phosphoratom Bestandteil eines Ringsystems ist. Für diese Verbindungsklassen stehen als Beispiele durch aromatische Reste substituiertes Phosphorbenzol, ferner aryl- und/oder alkylsubstituierte Phosphole und Phosphanorbornadiene.

Der Sulfonierung nach dem erfindungsgemäßen Verfahren sind Arylphosphine in handelsüblicher oder in der bei der Synthese anfallenden Form zugänglich. Eine besondere Reinigung ist entbehrlich, es sei denn, die weitere Verwendung der sulfonierten Verbindungen, z.B. als Katalysatorbestandteil, erfordere sie.

Es ist zweckmäßig, der Schwefelsäure bereits vor Eintragen des Phosphins die Borsäure zuzusetzen und das entstehende Wasser zu binden. Die Zugabe des Phosphins zu dem Sulfonierungsreagenz erfolgt anteilsweise bei 20 bis 120°C, wobei man z.B. durch Rühren für eine schnelle und gleichmäßige Verteilung und Auflösung der Phosphorverbindung in dem Reaktionsgemisch sorgt. Es hat sich bewährt, die Phosphorverbindung in gelöster Form dem Sulfonierungsreagenz zuzusetzen. Als Lösungsmittel verwendet man bevorzugt wasserfreie Schwefelsäure. Die völlige Lösung des Phosphines im H₂SO₄/H₃BO₃-Gemisch stellt sicher, daß Schwefelsäure im Überschuß vorliegt. Die Sulfonierung erfolgt bei Temperaturen im Bereich von 20 bis 350°C. Die aktuelle Reaktionstemperatur ist von der Art des Phosphins und dem gewünschten Sulfonierungsgrad abhängig und muß gegebenenfalls durch orientierende Versuche zuvor bestimmt werden. Als Grundregel gilt, daß mit steigender Temperatur der Sulfonierungsgrad zunimmt. Die ausgeprägte Temperaturabhängigkeit des Sulfonierungsgrades erlaubt es, selektiv eine bestimmte Anzahl Sulfonsäuregruppen in das Phosphinmolekül einzuführen. So wird z.B. Triphenylphosphin bei 60°C zweifach sulfoniert. Um eine möglichst gleichmäßige Temperatur aufrechtzuerhalten empfiehlt es sich, das Reaktionsgemisch zu rühren. Die Reaktionszeit ist abhängig von der Art des Phosphins und der Anzahl Sulfonsäuregruppen, die in das Phosphinmolekül eingeführt werden sollen. Im allgemeinen beträgt sie mehrere Stunden bis mehrere Tage.

Nachdem die Umsetzung beendet ist, wird das Reaktionsgemisch mit Wasser verdünnt und aufgearbeitet. Nach einem bevorzugten Verfahren extrahiert man die erhaltene saure, wäßrige Lösung des Sulfonierungsproduktes mit der Lösung eines wasserunlöslichen Amins in einem wasserunlöslichen organischen Lösungsmittel. Auf diesem Wege erhält man sulfonierte Arylphosphine, die weitgehend frei von den im Sulfonierungsschritt zugesetzten Lewis-Säuren sind. Besonders bewährt hat sich diese Arbeitsweise bei Verwendung von Borsäure als Lewis-Säure.

Im einzelnen wird bei dieser Art der Aufarbeitung das Sulfonierungsgemisch mit soviel, vorzugsweise sauerstofffreiem, Wasser versetzt, wie zur Verdünnung der vorhandenen Schwefelsäure auf 0,5 bis 50 Gew.-%, vorzugsweise 25 bis 35 Gew.-% nötig ist. Zu der verdünnten Lösung gibt man das in einem wasserunlöslichen organischen Lösungsmittel gelöste wasserunlösliche Amin. Die Konzentration der Amin-Lösung beträgt 1,0 bis 35 Gew.-%, vorzugsweise 10 bis 30 Gew.-% und insbesondere 13 bis 25 Gew.-% Amin, jeweils bezogen auf die Lösung.

Je Äquivalent Sulfonsäure verwendet man 0,5 bis 3,0 mol, vorzugsweise 0,5 bis 2,5 mol Amin. Der Einsatz überschüssigen Amins stellt sicher, daß nur geringe Phosphinverluste eintreten. Ein höherer Aminüberschuß als vorstehend angegeben ist zwar möglich, führt jedoch nicht zur Verbesserung des Ergebnisses der Trenn- bzw. Reinigungsoperation oder der Ausbeute.

Nach intensivem Mischen bilden sich zwei Phasen. Die spezifisch schwerere, wäßrige Phase enthält die Schwefelsäure und nahezu die gesamte Orthoborsäure, die sulfatarme und von Orthoborsäure annähernd freie organische Phase das Aminsalz des sulfonierten Phosphins, gelöst in dem organischen Lösungsmittel. Die beiden Phasen werden voneinander getrennt. Die organische Phase wird gegebenenfalls z.B. mit Wasser gewaschen, um noch gelöste Borsäure zu entfernen und darauf mit der Lösung einer anorganischen Base in Wasser umgesetzt. Die Base gelangt hierbei in einer der gelösten Aminsalzmenge äquivalenten Menge zum Einsatz. Überschüssige Base ist zu vermeiden, weil sie das Endprodukt verunreinigt. Man erhält auf diese Weise unter Wiedergewinnung des wasserunlöslichen Amins die wäßrige Lösung des sulfonierten Arylphosphins. Das Amin steht für einen erneuten Einsatz zur Verfügung.

Das beschriebene Verfahren kann sowohl diskontinuierlich als auch kontinuierlich durchgeführt werden. Die für Stofftrennungen gebräuchlichen Apparate wie Gegenstromextraktionsanlagen, finden Anwendung.

Statt die in Wasser gelöste Base auf einmal der Lösung des Aminsalzes im organischen Medium zuzusetzen, kann die Zugabe nach einer bevorzugten Ausführungsform in Anteilen erfolgen. Diese Arbeitsweise wird mit Erfolg besonders dann eingesetzt, wenn die Auftrennung eines Sulfonierungsgemisches angestrebt wird, das Produkte verschiedener Sulfonierungsstufen enthält.

Als wasserunlösliche Amine, die zur Durchführung des Verfahrens eingesetzt werden, kommen wasserunlösliche homo- und heterocyclische, aliphatische, aromatische, araliphatische und vorzugsweise offenkettige, verzweigte oder unverzweigte aliphatische Amine mit 10 bis 60, vorzugsweise 13 bis 36 Kohlenstoffatomen in Betracht. Weniger geeignet sind Amine, deren Salze mit den Sulfonsäuren in dem organischen Lösungsmittel nicht oder nur beschränkt löslich sind. Als Beispiele für besonders bewährte Amine seien genannt: Tri-n-octylamin, Triisooctylamin, Tri-2-ethylhexylamin und Tridodecylamin.

Die Amine werden in einem wasserunlöslichen organischen Lösungsmittel gelöst. Geeignet sind insbesondere aliphatische oder aromatische Kohlenwasserstoffe oder Kohlenwasserstoffgemische, z.B. Toluol oder Kerosin, daneben auch C₄- bis C₂₀-Alkohole und C₈- bis C₂₀-Ether.

Als Basen für die Überführung der sulfonsauren Phosphine in die Wasserphase sind die Hydroxide der Alkali- und Erdalkalimetalle, insbesondere Alkalihydroxide, Ammoniak, daneben auch die Alkalicarbonate, geeignet.

Die Aufarbeitung wird zweckmäßig im Bereich von 0 bis 40°C, vorzugsweise Raumtemperatur bis etwa 40°C durchgeführt. Höhere Temperaturen ergeben keine Vorteile. Die Angaben über die Löslichkeit der Amine und der organischen Lösungsmittel im Wasser beziehen sich hierbei jeweils auf die Temperaturen, bei denen das Verfahren durchgeführt wird. Das Endprodukt wird entweder in der wäßrigen Lösung belassen oder durch Eindampfen oder durch Kristallisation, Dekantieren oder Abfiltrieren in fester Form gewonnen.

Das neue Verfahren wird in den nachfolgenden Beispielen erläutert, es ist jedoch nicht auf die beschriebene Ausführungsform beschränkt.

### Beispiel 1: Herstellung von Di(m-sulfonatophenyl)phenylphosphin

Zu einer Lösung von 4,8 g (77,8 mmol) Orthoborsäure in 20 ml konzentrierter Schwefelsäure werden 20 ml Oleum (65 Gew.-% SO₃) getropft, so daß im Gemisch eine SO₃-Konzentration von etwa 0,9 Gew.-% resultiert. Das überschüssige SO₃ wird innerhalb von 45 Minuten bei 60°C im Hochvakuum entfernt. In dem wasserfreien H₂SO₄/H₃BO₃-Gemisch löst man unter Rühren 3,0 g (11,4 mmol) Triphenylphosphin. Man erhitzt 4 d auf 58°C und hydrolysiert das Reaktionsgemisch nach dem Abkühlen mit 50 ml sauerstofffreiem Wasser. Anschließend wird die wäßrige Lösung mit 16 ml Triisooctylamin in 49 ml Toluol extrahiert. Die organische Phase wird dreimal mit 20 ml Wasser gewaschen, um die Borsäure vollständig abzutrennen und anschließend mit 7,5 m Natronlauge bis zur Einstellung eines pH-Wertes von 11,8 reextrahiert. Darauf wird die wäßrige alkalische Lösung mit 3 m Schwefelsäure neutralisiert, im Vakuum zur Trockne eingedampft und der zurückbleibende Feststoff mit 40 ml Methanol extrahiert. Aus der Lösung in Methanol erhält man durch Entfernen des Lösungsmittels das zweifach sulfonierte Triphenylphosphin als weißen, glasigen Feststoff. Die Ausbeute beträgt 4,69 g, entsprechend 94 % der Theorie.

### Charakterisierung des Produktes

³¹P-{¹H}-NMR (D₂O):δ = -3.38 ppm (s), (TPPDS p.a.: δ = -3.41 ppm (s))
P/S-Verhältnis: 1 : 2 (laut Elementaranalyse, Natriumsulfat-frei).

### Beispiel 2: Herstellung von 5-fach sulfoniertem 2,2'-bis(diphenylphosphinomethyl)-1,1'-binaphthalin

Zu einer Lösung von 4,8 g (77,8 mmol) Orthoborsäure in 20 ml konzentrierter Schwefelsäure werden 18 ml Oleum (65 Gew.-% SO₃) getropft, so daß in der Lösung eine SO₃-Konzentration von etwa 4,99 Gew.-% resultiert. Das überschüssige SO₃ wird innerhalb von 45 Minuten bei 60°C im Hochvakuum entfernt. In dem Gemisch löst man unter Rühren 2,0 g (3,07 mmol) 2,2'-Bis(diphenylphosphinomethyl)-1,1'-binaphthalin und erhitzt es 24 h auf 62°. Darauf kühlt man auf Raumtemperatur ab, hydrolysiert das Gemisch mit 40 ml sauerstofffreiem Wasser und extrahiert es mit 6 ml Triisooctylamin in 40 ml Toluol. Die organische Phase wird dreimal mit je 20 ml Wasser gewaschen, um die Borsäure vollständig abzutrennen und reextrahiert sie anschließend mit 7,5 m NaOH bis zum Erreichen eines pH-Wertes von 11,8. Darauf wird die wäßrige, alkalische Lösung mit 3 m Schwefelsäure neutralisiert, im Vakuum zur Trockne eingedampft und der zurückbleibende Feststoff mit 40 ml Methanol extrahiert. Durch Entfernen des Lösungsmittels erhält man aus dem Extrakt das Produkt als gelbbraunen, glasigen Feststoff. Die Ausbeute beträgt 3,78 g, entsprechend 82 % der Theorie.

### Analytische Charakterisierung

Die quantitative Analyse des Produktes entspricht der Formel C₄₆H₄₁P₂O₂₀Na₅S₅, d.h. dem fünf Moleküle Wasser enthaltenden Natriumsalz des 5-fach sulfonierten 2,2'-bis(diphenylphosphinomethyl)-1,1'-binaphthalins. Die Anteile von Reaktionsprodukten unterschiedlichen Sulfonierungsgrades werden durch Kapillarelektrophorese bestimmt; die Untersuchung hat folgende Ergebnisse:

| | | | | | |
|---|---|---|---|---|---|
| Sulfonierungsgrad | 2-fach | 3-fach | 4-fach | 5-fach | 6-fach |
| Anteil am Reaktionsprodukt (in mol-%) | 0,35 | - | 17,15 | 71,3 | 11,2 |

## Patentansprüche

1. Verfahren zur Herstellung sulfonierter Arylphosphine durch Sulfonierung Arylgruppen enthaltender Mono-, Di-, Oligo- oder Polyphosphine, dadurch gekennzeichnet, daß die Sulfonierung bei Temperaturen von 20 bis 350°C mit einem wasserfreien Gemisch aus Schwefelsäure und Orthoborsäure erfolgt.

2. Verfahren nach Anspruch 1, dadurch gekennzeichnet, daß die Sulfonierung der Arylphosphine bei Temperaturen von 20 bis 170°C erfolgt.

3. Verfahren nach Anspruch 1 oder 2, dadurch gekennzeichnet, daß im Gemisch aus Schwefelsäure und Orthoborsäure enthaltenes Wasser mit Hilfe wasserbindender Mittel entfernt wird.

4. Verfahren nach Anspruch 3, dadurch gekennzeichnet, daß als wasserbindendes Mittel Schwefeltrioxid verwendet wird.

5. Verfahren nach Anspruch 4, dadurch gekennzeichnet, daß Schwefeltrioxid in Form von Oleum eingesetzt wird.

6. Verfahren nach einem oder mehreren der Ansprüche 1 bis 5, dadurch gekennzeichnet, daß man die Arylphosphine als Lösung in wasserfreier Schwefelsäure in das wasserfreie Gemisch aus Schwefelsäure und Orthoborsäure einträgt.

7. Verfahren nach einem oder mehreren der Ansprüche 1 bis 6, dadurch gekennzeichnet, daß die Orthoborsäure, bezogen auf die im zu sulfonierenden Arylphosphin enthaltenen P(III)-Atome in mindestens äquimolarer Menge eingesetzt wird.

8. Verfahren nach einem oder mehreren der Ansprüche 1 bis 7, daduch gekennzeichnet, daß das wasserfreie Gemisch aus Schwefelsäure und Orthoborsäure mit Orthoborsäure gesättigt ist.

9. Verfahren nach einem oder mehreren der Ansprüche 1 bis 8, dadurch gekennzeichnet, daß nach beendeter Sulfonierung das Reaktionsgemisch mit Wasser verdünnt und die erhaltene wäßrige Lösung mit der Lösung eines wasserunlöslichen Amins in einem wasserunlöslichen organischen Lösungsmittel extrahiert wird, wobei je chemischem Äquivalent Sulfonsäure 0,5 bis 3 mol des Amins angewandt werden, die organische Phase abgetrennt und mit der wäßrigen Lösung einer Base in innige Berührung gebracht, darauf die wäßrige Phase abgetrennt und aus dieser das sulfonierte Arylphosphin isoliert wird.

10. Verfahren nach Anspruch 9, dadurch gekennzeichnet, daß man das Reaktionsgemisch mit soviel, vorzugsweise mit Stickstoff gesättigtem Wasser versetzt, wie zur Verdünnung der vorhandenen Schwefelsäure auf 0,5 bis 50 Gew.-%, vorzugsweise 25 bis 35 Gew.-%, nötig ist.

11. Verfahren nach Anspruch 9 oder 10, dadurch gekennzeichnet, daß man je chemisches Äquivalent Sulfonsäure 0,5 bis 2,5 mol Amin anwendet.

12. Verfahren nach einem oder mehreren der Ansprüche 9 bis 11, dadurch gekennzeichnet, daß die Konzentration des Amins in der Aminlösung 1,0 bis 35 Gew.-%, vorzugsweise 10 bis 30 Gew.-% und insbesondere 13 bis 25 Gew.-%, jeweils bezogen auf die Lösung, beträgt.

13. Verfahren nach einem oder mehreren der Ansprüche 9 bis 12, dadurch gekennzeichnet, daß die wasserunlöslichen Amine offenkettige, verzweigte oder unverzweigte aliphatische Amine mit 10 bis 60, vorzugsweise 13 bis 36 Kohlenstoffatomen sind.

14. Verfahren nach Anspruch 13, dadurch gekennzeichnet, daß das Amin Tri-n-Octylamin, Triisooctylamin, Diisooctylamin, Tri-2-Ethylhexylamin oder Tridodecylamin ist.

15. Verfahren nach einem oder mehreren der Ansprüche 9 bis 14, dadurch gekennzeichnet, daß das wasserunlösliche organische Lösungsmittel ein aliphatischer oder aromatischer Kohlenwasserstoff oder ein Kohlenwasserstoffgemisch ist.

16. Verfahren nach Anspruch 15, dadurch gekennzeichnet, daß das Lösungsmittel Toluol oder Kerosin ist.

## Claims

1. A process for the preparation of a sulfonated arylphosphine by sulfonation of a mono-, di-, oligo- or polyphosphine containing aryl groups, which comprises carrying out the sulfonation at temperatures from 20 to 350°C with an anhydrous mixture of sulfuric acid and orthoboric acid.

2. The process as claimed in claim 1, wherein the sulfonation of the arylphosphine is carried out at temperatures from 20 to 170°C.

3. The process as claimed in claim 1 or 2, wherein water contained in the mixture of sulfuric acid and orthoboric acid is removed with the aid of a water-binding agent.

4. The process as claimed in claim 3, wherein sulfur trioxide is used as the water-binding agent.

5. The process as claimed in claim 4, wherein sulfur trioxide is employed in the form of oleum.

6. The process as claimed in one or more of claims 1 to 5, wherein the arylphosphine is introduced as a solution in anhydrous sulfuric acid into the anhydrous mixture of sulfuric acid and orthoboric acid.

7. The process as claimed in one or more of claims 1 to 6, wherein the orthoboric acid is employed in at least the equimolar amount, based on the P(III) atoms contained in the arylphosphine to be sulfonated.

8. The process as claimed in one or more of claims 1 to 7, wherein the anhydrous mixture of sulfuric acid and orthoboric acid is saturated with orthoboric acid.

9. The process as claimed in one or more of claims 1 to 8, wherein, when the sulfonation has ended, the reaction mixture is diluted with water and the resulting aqueous solution is extracted with a solution of a water-insoluble amine in a water-insoluble organic solvent, 0.5 to 3 mol of the amine being used per chemical equivalent of sulfonic acid, the organic phase is separated off and brought into intimate contact with an aqueous solution of a base, and thereafter the aqueous phase is separated off and the sulfonated arylphosphine is isolated from this.

10. The process as claimed in claim 9, wherein water, preferably saturated with nitrogen, is added to the reaction mixture in an amount such as is necessary for dilution of the sulfuric acid present to 0.5 to 50 % by weight, preferably 25 to 35 % by weight.

11. The process as claimed in claim 9 or 10, wherein 0.5 to 2.5 mol of amine are used per chemical equivalent of sulfonic acid.

12. The process as claimed in one or more of claims 9 to 11, wherein the concentration of the amine in the amine solution is 1.0 to 35 % by weight, preferably 10 to 30 % by weight, and in particular 13 to 25 % by weight, in each case based on the solution.

13. The process as claimed in one or more of claims 9 to 12, wherein the water-insoluble amine is an openchain, branched or unbranched aliphatic amine having 10 to 60, preferably 13 to 36 carbon atoms.

14. The process as claimed in claim 13, wherein the amine is tri-n-octylamine, triisooctylamine, diisooctylamine, tri-2-ethylhexylamine or tridodecylamine.

15. The process as claimed in one or more of claims 9 to 14, wherein the water-insoluble organic solvent is an aliphatic or aromatic hydrocarbon or a hydrocarbon mixture.

16. The process as claimed in claim 15, wherein the solvent is toluene or kerosine.

## Revendications

1. Procédé de préparation d'arylphosphines sulfonées par sulfonation de mono-, di-, oligo- ou polyphosphines contenant des groupes aryle, caractérisé en ce que la sulfonation se fait à des températures de 20 à 350 °C avec un mélange anhydre d'acide sulfurique et d'acide orthoborique.

2. Procédé selon la revendication 1, caractérisé en ce que la sulfonation des arylphosphines se fait à des températures de 20 à 170 °C.

3. Procédé selon la revendication 1 ou la revendication 2, caractérisé en ce que l'eau contenue dans le mélange d'acide sulfurique et d'acide orthoborique est éliminée au moyen d'agents liant l'eau.

4. Procédé selon la revendication 3, caractérisé en ce que l'on utilise comme agent liant l'eau du trioxyde de soufre.

5. Procédé selon la revendication 4, caractérisé en ce que le trioxyde de soufre est utilisé sous forme d'oléum.

6. Procédé selon l'une ou plusieurs des revendications 1 à 5, caractérisé en ce que l'on introduit les arylphosphines sous forme de solution dans de l'acide sulfurique anhydre dans le mélange anhydre d'acide sulfurique et d'acide orthoborique.

7. Procédé selon l'une ou plusieurs des revendications 1 à 6, caractérisé en ce que l'acide orthoborique est utilisé en une quantité au moins équimolaire, ramenée aux atomes de P(III) contenus dans l'arylphosphine à sulfoner.

8. Procédé selon l'une ou plusieurs des revendications 1 à 7, caractérisé en ce que le mélange anhydre d'acide sulfurique et d'acide orthoborique est saturé en acide orthoborique.

9. Procédé selon l'une ou plusieurs des revendications 1 à 8, caractérisé en ce que, une fois la sulfonation terminée, on dilue le mélange réactionnel avec de l'eau et on extrait la solution aqueuse obtenue avec la solution d'une amine insoluble dans l'eau dans un solvant organique insoluble dans l'eau, en utilisant de 0,5 à 3 moles d'amine pour un équivalent chimique d'acide sulfonique, on sépare la phase organique et on la met en contact intime avec la solution aqueuse d'une base, puis on sépare la phase aqueuse et on isole à partir de celle-ci l'arylphosphine sulfonée.

10. Procédé selon la revendication 9, caractérisé en ce que l'on ajoute au mélange réactionnel la quantité d'eau, de préférence saturée avec de l'azote, nécessaire pour diluer l'acide sulfurique présent à la concentration de 0,5 à 50 % en poids, de préférence de 25 à 35 % en poids.

11. Procédé selon la revendication 9 ou la revendication 10, caractérisé en ce que l'on utilise de 0,5 à 2,5 moles d'amine pour un équivalent chimique d'acide sulfonique.

12. Procédé selon l'une ou plusieurs des revendications 9 à 11, caractérisé en ce que la concentration de l'amine dans la solution d'amine est de 1,0 à 35 % en poids, de préférence de 10 à 30 % en poids et notamment de 13 à 25 % en poids, ramené à chaque fois au poids de la solution.

13. Procédé selon l'une ou plusieurs des revendications 9 à 12, caractérisé en ce que les amines insolubles dans l'eau sont des amines aliphatiques à chaîne ouverte, ramifiées ou non ramifiées ayant de 10 à 60, de préférence de 13 à 36 atomes de carbone.

14. Procédé selon la revendication 13, caractérisé en ce que l'amine est la tri-n-octylamine, la triisooctylamine, la tri-2-éthylhexylamine ou la tridodécylamine.

15. Procédé selon l'une ou plusieurs des revendications 9 à 14, caractérisé en ce que le solvant organique insoluble dans l'eau est un hydrocarbure ou un mélange d'hydrocarbures aliphatiques ou aromatiques.

16. Procédé selon la revendication 15, caractérisé en ce que le solvant est le toluène ou le kérosène.
